# EUROPÄISCHE PATENTSCHRIFT

(11) **EP 2 486 459 B1**
(45) Veröffentlichungstag und Bekanntmachung des Hinweises auf die Patenterteilung: **19.11.2014**
(21) Anmeldenummer: 10747627.7
(22) Anmeldetag: 30.08.2010
(51) Int. Cl.: G05B 15/02, H04L 12/24, H04L 12/403, H04L 12/26, H04L 12/40

(54) **Feldbus-Interface und Verfahren zum Betreiben desselben**
Field bus interface and corresponding operating method
Interface de bus de terrain et procédé de fonctionnement correspondant

(30) Priorität: 06.10.2009 DE 102009045384
(43) Veröffentlichungstag der Anmeldung: 15.08.2012
(73) Patentinhaber: Endress + Hauser Process Solutions AG, 4153 Reinach (CH)
(72) Erfinder: KÖLBLIN, Robert, 79539 Lörrach (DE); MANEVAL, Michael, 79650 Schopfheim (DE); PÖSCHMANN, Axel, CH-4057 Basel (CH); REINKENSMEIER, Jörg, 79585 Steinen (DE)
(74) Vertreter: Andres, Angelika Maria
(86) Internationale Anmeldenummer: PCT/EP2010/062612
(87) Internationale Veröffentlichungsnummer: WO 2011/042258

(56) Entgegenhaltungen:
- DE-A1- 19 831 405
- DE-A1-102005 063 053
- US-A1- 2005 066 104

## Beschreibung

Die vorliegende Erfindung betrifft ein Verfahren zum Betreiben eines Feldbus-Interface, das an einem Feldbus der Prozessautomatisierungstechnik angeschlossen ist.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über Bussysteme (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte.

Eine übergeordnete Einheit übernimmt bei Inbetriebnahme einer Anlage die Systemkonfiguration mittels eines Engineering-Programms (Engineering Software), das in die übergeordnete Einheit geladen wird. Dabei führt die übergeordnete Einheit insbesondere die Konfiguration der einzelnen, ihr zugeordneten Feldgeräte durch. Bei solch einer Konfiguration wird unter anderem festgelegt, welche Ausgänge die übergeordnete Einheit im Rahmen der Prozesssteuerung an die einzelnen, ihr zugeordneten Feldgeräte liefert und welche Eingänge durch die übergeordnete Einheit im Rahmen der Prozesssteuerung von den einzelnen, ihr zugeordneten Feldgeräten erhalten werden.

In Anlagen der Prozessautomatisierungstechnik werden häufig computerunterstützte Systeme eingesetzt, durch welche ein Asset Management, eine Zustandsüberwachung (Condition Monitoring), und/oder eine Anlagenüberwachung durchgeführt wird. Solche Systeme sind häufig separat von einer übergeordneten Einheit, die unter anderem zur Prozesssteuerung in einem Feldbus-Segment dient, ausgebildet. Häufig sind sie an einem (dem Feldbus-Segment) übergeordneten Firmennetzwerk (beispielsweise an einem Ethernet®-Netzwerk) angeschlossen. Dadurch können diese Systeme übergreifend für mehrere Feldbus-Segmente eingesetzt werden.

Für die Ausführung ihrer Dienste benötigen solche Systeme oftmals Konfigurationsinformationen bezüglich des zyklischen Datenverkehrs auf dem jeweiligen Feldbus. Beispielsweise sind Konfigurationsinformationen bezüglich des zyklischen Datenverkehrs auf dem jeweiligen Feldbus erforderlich, um Telegramme, die im Rahmen der Prozesssteuerung zwischen einer übergeordneten Einheit und mindestens einem, ihr zugeordneten Feldgerät über den Feldbus übermittelt werden, auswerten zu können. Dabei ist problematisch, dass die oberhalb beschriebenen, computerunterstützten Systeme, wenn diese separat von einer übergeordneten Einheit (z.B. einer SPS) ausgebildet sind, oftmals keinen Zugriff auf die erforderlichen Konfigurationsinformationen bezüglich des zyklischen Datenverkehrs auf dem Feldbus haben. Dies ist insbesondere dann der Fall, wenn die computerunterstützten Systeme von einem anderen Hersteller als die jeweils eingesetzte(n) übergeordnete(n) Einheit(en) sind.

Aus der Druckschrift WO 2007/074105 A2 ist ein Verfahren zur Anlagenüberwachung in einer Anlage, in der mehrere Feldgeräte über einen Feldbus mit einer Prozesssteuereinheit und einer Anlagenüberwachungseinheit, wie beispielsweise einem Gateway, kommunizieren, bekannt. Die Anlagenüberwachungseinheit prüft dabei den regelmäßigen Datenverkehr auf Informationen, die auf ein Diagnoseereignis bei einem der Feldgeräte hinweisen. Falls ein Telegramm mit einem Hinweis auf ein Diagnoseereignis festgestellt wird, werden von der Anlagenüberwachungseinheit weitere Diagnoseinformationen von dem betreffenden Feldgerät angefordert.

Die Aufgabe der vorliegenden Erfindung besteht darin, bei einem Feldbus der Prozessautomatisierungstechnik ein Verfahren bereitzustellen, durch das Drittsystemen, die Dienste in Bezug auf den Feldbus ausführen, Konfigurationsinformationen bezüglich des zyklischen Datenverkehrs auf dem Feldbus bereitstellbar sind.

Die Aufgabe wird durch ein Verfahren zum Betreiben eines Feldbus-Interface gemäß Anspruch 1 sowie durch ein Feldbus-Interface gemäß Anspruch 10 gelöst. Vorteilhafte Weiterbildungen der Erfindung sind in den abhängigen Ansprüchen angegeben.

Gemäß der vorliegenden Erfindung wird ein Verfahren zum Betreiben eines Feldbus-Interface, das an einem Feldbus der Prozessautomatisierungstechnik angeschlossen ist, bereitgestellt. Das Verfahren weist dabei nachfolgende Schritte auf:
A) Abhören des Datenverkehrs auf dem Feldbus durch das Feldbus-Interface; und
B) Erfassen von mitgehörten Konfigurationsinformationen, welche die Konfiguration des zyklischen Datenverkehrs auf dem Feldbus betreffen, durch das Feldbus-Interface.

Indem das Feldbus-Interface den Datenverkehr auf dem Feldbus abhört, hört es sämtliche, zwischen einer übergeordneten Einheit und den ihr zugeordneten Feldgeräten über den Feldbus übermittelten Informationen mit. Insbesondere hört es auch die Konfigurationsinformationen bezüglich des zyklischen Datenverkehrs auf dem Feldbus mit. Diese werden insbesondere während einer Initialisierungsphase zwischen einer übergeordneten Einheit und den ihr zugeordneten Feldgeräten über den Feldbus übermittelt. Dementsprechend kann das Feldbus-Interface auf einfache Weise Konfigurationsinformationen bezüglich des zyklischen Datenverkehrs auf dem Feldbus erfassen. Es kann diese Konfigurationsinformationen ferner Drittsystemen, die beispielsweise separat von einer übergeordneten Einheit ausgebildet sind und die Dienste in Bezug auf den Feldbus ausführen, bereitstellen. Bei solchen Drittsystemen kann es sich beispielsweise um intelligente Anwendungen, die zur Ausführung ihrer Dienste Konfigurationsinformationen bezüglich des zyklischen Datenverkehrs auf dem Feldbus benötigen, handeln. Ferner können die in einem Feldbus-Interface erfassten Konfigurationsinformationen im Bedarfsfall, zum Beispiel in Laboranlagen zur Fehlersuche bzw. zur Optimierung der Anlage, wieder abgespielt werden.

Dabei benötigt das Feldbus-Interface für die Durchführung der Schritte des Abhörens und des Erfassens keine fest konfigurierte, permanente Feldbusadresse, so dass keine aufwändige Parametrierung des Feldbus-Interface erforderlich ist. Auch wird der Busverkehr auf dem Feldbus durch das Feldbus-Interface nicht zusätzlich belastet.

Bei der Durchführung des erfindungsgemäßen Verfahrens werden die mitgehörten Informationen, die in entsprechenden Telegrammen über den Feldbus übermittelt werden, durch das Feldbus-Interface insbesondere daraufhin geprüft, ob es sich um zu erfassende Konfigurationsinformationen bezüglich des zyklischen Datenverkehrs auf dem Feldbus handelt. Ist dies der Fall, so werden sie durch das Feldbus-Interface erfasst (Schritt B).

Als Feldbus-Interface wird in dem vorliegenden Zusammenhang ein Modul bezeichnet, das für einen Anschluss an einen Feldbus ausgebildet ist und durch das Informationen, die über den Feldbus kommuniziert werden, zumindest teilweise an eine separat von dem Feldbus-Interface ausgebildete Kommunikationseinheit bereitstellbar sind. Die Kommunikationseinheit kann insbesondere in Bezug auf die Netzwerkstruktur übergeordnet zu dem Feldbus sein, so dass sie eine übergeordnete Kommunikationseinheit bildet. Die Kommunikationseinheit kann ferner direkt, über ein übergeordnetes Netzwerk (z.B. ein firmeninternes Ethernet-LAN (LAN: local area network; deutsch: lokales Datennetz)) oder über eine anderweitige Kommunikationsverbindung (z.B. eine USB-Schnittstelle) an dem Feldbus-Interface angeschlossen sein. Gegebenenfalls erfolgt durch das Feldbus-Interface auch eine Protokollumsetzung, wie es auch bei einem Gateway der Fall ist.

Die Verfahrensschritte des erfindungsgemäßen Verfahrens sowie die Verfahrensschritte der Weiterbildungen, soweit dies technisch sinnvoll ist, werden vorzugsweise automatisiert durch eine entsprechend eingerichtete Soft- und/oder Hardware des Feldbus-Interface durchgeführt.

Neben den genannten Konfigurationsinformationen, welche die Konfiguration des zyklischen Datenverkehrs auf dem Feldbus betreffen, können durch das Feldbus-Interface auch weitere mitgehörte Informationen erfasst werden. Dies kann beispielsweise dann sinnvoll sein, wenn Drittsysteme, wie beispielsweise eine separat ausgebildete Kommunikationseinheit, und/oder das Feldbus-Interface selbst weitere, über den Feldbus übermittelte Informationen benötigen. Ferner kann das Feldbus-Interface auch noch weitere Funktionen bereitstellen.

Vorzugsweise wird durch das Feldbus-Interface lediglich der Datenverkehr auf dem Feldbus abgehört und keine Kommunikation über den Feldbus durchgeführt. Dadurch muss, wie oberhalb erläutert wird, nur ein geringer Aufwand für die Einbringung des Feldbus-Interface in einen Feldbus erbracht werden. Sofern es zur Erfüllung weiterer Funktionen erforderlich ist, kann das Feldbus-Interface aber auch derart ausgebildet und parametriert sein, dass es eine Kommunikation über den Feldbus durchführen kann.

Gemäß einer Weiterbildung weisen die Konfigurationsinformationen bezüglich des zyklischen Datenverkehrs auf dem Feldbus Informationen über die Ausgänge, die im Rahmen einer Prozesssteuerung von einer übergeordneten Einheit an ein ihr zugeordnetes Feldgerät geliefert werden, und/oder Informationen über die Eingänge, die im Rahmen einer Prozesssteuerung durch eine übergeordnete Einheit von einem ihr zugeordneten Feldgerät erhalten werden, auf. Indem diese Informationen durch das Feldbus-Interface bei dem Schritt des Erfassens (Schritt B) erfasst werden, kann ein computerunterstütztes Drittsystem (z.B. eine separat von dem Feldbus-Interface ausgebildete Kommunikationseinheit) mit Hilfe von diesen Konfigurationsinformationen Telegramme, die im Rahmen der Prozesssteuerung über den Feldbus zwischen einer übergeordneten Einheit und den ihr zugeordneten Feldgeräten übermittelt werden, auswerten. Ohne diese Konfigurationsinformationen wäre für ein computerunterstütztes Drittsystem nicht die Bedeutung und der Zusammenhang der im Rahmen der Prozesssteuerung in den einzelnen Telegrammen übermittelten Werte erschließbar.

Insbesondere wird bei einem Feldbus gemäß dem Profibus®-Standard durch diese Konfigurationsinformationen bezüglich der Ein- und Ausgänge der übergeordneten Einheit angegeben, wie viele Bytes die übergeordnete Einheit (Master) einem zugeordneten Feldgerät (Slave) bei Durchführung der Prozesssteuerung als Ausgänge sendet und wie viele Bytes die übergeordnete Einheit (Master) von einem zugeordneten Feldgerät (Slave) bei Durchführung der Prozesssteuerung als Eingänge erhält. Ferner wird insbesondere bei modularen Profibus-Feldgeräten durch die Konfiguration derselben erst festgelegt, welche Module bzw. welches Modul (einer Mehrzahl von möglichen Modulen) tatsächlich im Einsatz des Feldgerätes verwendet wird/werden. Dementsprechend verändert sich je nach Auswahl der Module auch die Anzahl der Bytes der von der übergeordneten Einheit erhaltenen Ausgänge und/oder der an die übergeordnete Einheit gesendeten Eingänge.

Die Prozesssteuerung läuft bei einem Feldbus gemäß dem Profibus®-Standard beispielsweise wie folgt ab: Eine übergeordnete Einheit, wie beispielsweise eine SPS, die einen Master Klasse 1 (im Folgenden MC1) bildet, führt in Bezug auf die Feldgeräte, die ihr zugeordnet sind und jeweils Slaves bilden, eine Prozesssteuerung durch. In einem Zyklus (d.h. im Rahmen einer zyklischen Kommunikation) werden durch die übergeordnete Einheit nach vorbestimmten Regeln von den einzelnen, ihr zugeordneten Sensoren des Feldbusses Messwerte angefragt und in Abhängigkeit von den erhaltenen Messwerten Steuerbefehle an die einzelnen, ihr zugeordneten Aktoren ausgegeben. Die hierbei verwendeten Telegramme werden insbesondere als "Data_Exchange-Telegramme" (deutsch: Datenaustausch-Telegramme) bezeichnet. Sind alle, der übergeordneten Einheit zugeordneten Feldgeräte in dieser Weise abgearbeitet, so ist der Zyklus beendet. Nach Beendigung eines Zyklus reicht die übergeordnete Einheit den Token an einen weiteren MC1 oder an einen MC2 (Master Klasse 2) weiter, sofern ein solcher an dem Feldbus angeschlossen ist. Dabei kann auch vorgesehen sein, dass an einem Feldbus mehrere als nur eine übergeordnete Einheit vorgesehen sind.

Mit "Feldgerät" wird nicht ausschließlich auf Sensoren und/oder Aktoren Bezug genommen. Vielmehr werden als Feldgeräte auch solche Einheiten bezeichnet, die direkt an dem Feldbus angeschlossen sind und zur Kommunikation mit einer übergeordneten Einheit (z.B. einer SPS) dienen, wie z.B. Remote I/Os, Gateways, Linking Devices.

Gemäß einer Weiterbildung weisen die Konfigurationsinformationen bezüglich des zyklischen Datenverkehrs auf dem Feldbus Informationen bezüglich der Geräteparameter, insbesondere bezüglich einer Frequenz des Wechselstromnetzes, das zur Versorgung von an dem Feldbus angeschlossenen Geräten eingesetzt wird, auf. Auch diese Konfigurationsinformationen können für ein computerunterstütztes Drittsystem (z.B. eine separat von dem Feldbus-Interface ausgebildete Kommunikationseinheit) für die Ausführung der jeweiligen Dienste erforderlich sein. Je nach Land kann die Frequenz des Wechselstromnetzes insbesondere 50 bzw. 60 Hz (Hertz) betragen. Bei den einzelnen Geräten, insbesondere Feldgeräten, muss bei der Konfiguration derselben jeweils angegeben werden, welche Frequenz das verwendete Wechselstromnetz hat, da in den Geräten für deren Einsatz unter anderem die Filtereinstellungen entsprechend anzupassen sind.

Gemäß einer Weiterbildung werden erfasste Konfigurationsinformationen bezüglich des zyklischen Datenverkehrs auf dem Feldbus durch das Feldbus-Interface gespeichert. Vorzugsweise ist in dem Feldbus-Interface ein entsprechender Speicher, insbesondere ein Zwischenspeicher, vorgesehen. Auf diese Weise können die Konfigurationsinformationen bei Bedarf von einem computerunterstützten Drittsystem abgefragt oder auf eigene Initiative (beispielsweise entsprechend einer vorbestimmten Regel oder situationsabhängig) von dem Feldbus-Interface an ein computerunterstütztes Drittsystem bereitgestellt werden. Das Feldbus-Interface kann die Konfigurationsinformationen dabei unmittelbar oder auch in aufgearbeiteter oder weiterverarbeiteter Form speichern. Ferner kann das Feldbus-Interface die Konfigurationsinformationen zu den einzelnen, an dem Feldbus angeschlossenen Feldgeräten in einer Tabelle geeignet zusammenstellen, so dass eine Abfrage und ein Verständnis der gespeicherten Konfigurationsinformationen erleichtert werden. Sofern durch das Feldbus-Interface auch weitere Informationen (neben den genannten Konfigurationsinformationen) erfasst werden, werden diese vorzugsweise in entsprechender Weise durch das Feldbus-Interface gespeichert.

Gemäß einer Weiterbildung wird der Datenverkehr auf dem Feldbus durch das Feldbus-Interface zumindest während einer Initialisierungsphase mindestens eines, an dem Feldbus angeschlossenen Feldgerätes kontinuierlich abgehört. Dadurch wird sichergestellt, dass Konfigurationsinformationen, die zwischen dem Feldgerät und einer zugehörigen übergeordneten Einheit während der Initialisierungsphase des Feldgerätes übermittelt werden, durch das Feldbus-Interface mitgehört und erfasst werden können.

Mit Initialisierungsphase wird dabei auf die Phase Bezug genommen, die von einem Feldgerät nach einem Einschalten bzw. nach einem Reset desselben durchlaufen wird, um in den Kommunikationszustand, in dem ein zyklischer Datenaustausch mit einer übergeordneten Einheit stattfinden kann, zu gelangen.

Bei einem Feldgerät gemäß dem ²Profibus®-Standard werden die während der Initialisierungsphase durchlaufenen Kommunikationszustände durch die Profibus®-Zustandsmaschine beschrieben. Dabei kann ein Profibus®-Feldgerät nur dann einen zyklischen Datenaustausch mit einer zugehörigen übergeordneten Einheit durchführen, wenn es in dem Kommunikationszustand DATA EXCHANGE (kurz: DXCHG) ist. Um in diesen Kommunikationszustand zu gelangen, erwartet das Feldgerät von der übergeordneten Einheit eine Sequenz von Telegrammen und durchläuft dabei die verschiedenen Kommunikationszustände der Profibus®-Zustandsmaschine. Insbesondere erhält das Feldgerät nach einem Einschalten (Power_ON) bzw. einem Reset zunächst eine Diagnoseanfrage ("Slave_Diag-Anfragetelegramm") von der übergeordneten Einheit, auf das hin es seine Diagnose an die übergeordnete Einheit übersendet. Das Feldgerät befindet sich nun in dem Kommunikationszustand WPRM ("Wait Parameter"; deutsch: Warten auf Parameter). Als nächster Schritt übersendet die übergeordnete Einheit dem Feldgerät die einzustellenden Parameter ("Set_Prm-Anfragetelegramm"), wobei das Feldgerät daraufhin der übergeordneten Einheit den Erhalt bestätigt. Das Feldgerät wechselt dann in den Kommunikationszustand WCFG ("Wait Configuration"; deutsch: Warten auf Konfiguration). Als nächster Schritt übersendet die übergeordnete Einheit dem Feldgerät dessen Konfiguration ("Chk_Cfg-Anfragetelegramm"), wobei das Feldgerät daraufhin der übergeordneten Einheit den Erhalt bestätigt. Anschließend sendet die übergeordnete Einheit erneut eine Diagnoseanfrage ("Slave_Diag-Anfragetelegramm") an das Feldgerät, auf das hin es seine Diagnose an die übergeordnete Einheit übersendet und bestätigt, dass die übersendeten Parameter und die übersendete Konfiguration akzeptiert wurden. Anschließend geht das Feldgerät in den Kommunikationszustand DXCHG ("Data Exchange"; deutsch: Datenaustausch), so dass im Rahmen der Prozesssteuerung ein zyklischer Datenaustausch mit der übergeordneten Einheit stattfinden kann.

Wie aus der obigen Beschreibung der Initialisierungsphase eines Profibus®-Feldgerätes hervorgeht, werden während der Initialisierungsphase eines Feldgerätes über den Feldbus die in Bezug auf dieses Feldgerät relevanten Konfigurationsinformationen bezüglich des zyklischen Datenverkehrs auf dem Feldbus übermittelt. Durch Abhören und Erfassen derselben durch das Feldbus-Interface können sie Drittsystemen bereitgestellt werden.

Um die Konfigurationsinformationen durch das Feldbus-Interface möglichst vollständig in Bezug auf sämtliche, an einem Feldbus angeschlossenen Feldgeräte und der/den zugehörigen, übergeordneten Einheit(en) erfassen zu können, ist vorzugsweise vorgesehen, dass das Feldbus-Interface den Datenverkehr auf dem Feldbus bereits ab dem Laden des Engineering-Programms in die jeweilige übergeordnete Einheit kontinuierlich abhört. Denn nach dem Laden des Engineering-Programms in die übergeordnete Einheit führt die übergeordnete Einheit eine Systemkonfiguration durch. Dabei führt sie insbesondere eine Konfiguration sämtlicher, ihr zugeordneten Feldgeräte durch, so dass durch das Feldbus-Interface die zu erfassenden Konfigurationsinformationen in Bezug auf sämtliche, zugeordnete Feldgeräte erhalten werden können.

Wird das Feldbus-Interface erst nachträglich in einen bestehenden Feldbus (mit mindestens einer übergeordneten Einheit und zugehörigen Feldgeräten) eingebracht, so wird vorzugsweise eine Rekonfiguration der Anlage durchgeführt, was beispielsweise durch erneutes Laden des Engineering-Programms in die übergeordnete Einheit erzielbar ist. Grundsätzlich kann eine erneute Konfiguration der zugehörigen Feldgeräte durch die übergeordnete Einheit auch dadurch in Gang gesetzt werden, dass lediglich die Netzwerkkonfiguration erneut in die übergeordnete Einheit geladen wird. Diese Netzwerkkonfiguration ist jedoch meist in dem Engineering-Programm enthalten und kann nicht separat in die übergeordnete Einheit geladen werden.

Gemäß einer Weiterbildung weist das Verfahren nachfolgenden weiteren Schritt auf:
C) Übermitteln von erfassten Konfigurationsinformationen bezüglich des zyklischen Datenverkehrs auf dem Feldbus durch das Feldbus-Interface an mindestens eine Kommunikationseinheit, die mit dem Feldbus-Interface in Kommunikationsverbindung steht.
Auf diese Weise können die erfassten Konfigurationsinformationen an Drittsysteme, welche diese für die Ausführung ihrer Dienste benötigen, bereitgestellt werden. Dabei ist vorzugsweise vorgesehen, dass computerunterstützte Drittsysteme, welche die Konfigurationsinformationen für die Ausführung ihrer Dienste benötigen, gleichzeitig auch die Kommunikationseinheit bilden. Die Kommunikationseinheit kann insbesondere direkt, über ein übergeordnetes Netzwerk (z.B. ein firmeninternes Ethernet-LAN (LAN: local area network; deutsch: lokales Datennetz)) oder über eine anderweitige Kommunikationsverbindung (z.B. eine USB-Schnittstelle) an dem Feldbus-Interface angeschlossen sein. Ferner ist vorzugsweise vorgesehen, dass die Kommunikationseinheit eine übergeordnete Kommunikationseinheit bildet, was bedeutet, dass diese in Bezug auf die Netzwerkstruktur übergeordnet zu dem betreffenden Feldbus ist. Vorzugsweise erfolgt die Übermittlung auf Anfrage von der Kommunikationseinheit. Sie kann jedoch auch auf Initiative von dem Feldbus-Interface erfolgen.

Gemäß einer Weiterbildung der Erfindung werden erfasste Konfigurationsinformationen bezüglich des zyklischen Datenverkehrs auf dem Feldbus durch das Feldbus-Interface an ein computerunterstütztes Anlagen-Asset-Management-System, an ein computerunterstütztes Zustands-Überwachungs-System (Condition Monitoring) und/oder an ein computerunterstütztes System zur Anlagenoptimierung übermittelt.

Ein Anlagen-Asset-Management-System (kurz: PAM-System; PAM steht für "Plant Asset Management"; deutsch: Anlagen-Asset-Management) dient dazu, die Ausfallzeiten einer Anlage, insbesondere einer Anlage der Prozessautomatisierungstechnik, möglichst gering zu halten. Ferner sollen einem Anlagenbetreiber durch solch ein PAM-System möglichst umfassende Informationen über die in der Anlage eingesetzten Assets bereitgestellt werden. Als "Assets" werden dabei allgemein die Teile einer Anlage, die einen Wert der Anlage darstellen, wie beispielsweise die in einer Anlage eingesetzten Feldgeräte, bezeichnet. PAM-Systeme verwalten in der Regel in einer Datenbank Informationen zu den Assets einer Anlage. Dabei werden in einem PAM-System in der Regel die in einer Anlage eingesetzten Assets, insbesondere Feldgeräte, ein Austausch von Geräten, Änderungen an Geräten, wie beispielsweise der Austausch von Sensoren, die Implementierung einer neuen Softwareversion, etc. erfasst und der jeweilige zeitliche Ablauf dokumentiert. Insbesondere ist ein PAM-System oftmals derart eingerichtet, dass es regelmäßig eine Netzwerk-Verifikation durchführt, um die an einem Feldbus informationstechnisch angeschlossenen Geräte zu ermitteln. Ferner werden durch ein PAM-System in der Regel durchgeführte Wartungsarbeiten dokumentiert. Ein PAM-System wird beispielsweise durch FieldCare® von Endress+Hauser gebildet.

PAM-Systeme werden in der Regel durch den Anlagenbetreiber geführt. Sie sind dabei oftmals separat von einer übergeordneten Einheit (z.B. einer SPS), die zur Prozesssteuerung dient, ausgebildet und an einem übergeordneten Firmennetzwerk (beispielsweise an einem Ethernet®-Netzwerk) angeschlossen. Dadurch kann unter anderem die Erfassung der Assets von mehreren Feldbus-Segmenten in einem gemeinsamen PAM-System erfolgen. Auch computerunterstützte Zustands-Überwachungs-Systeme sowie computerunterstützte Systeme zur Anlagenoptimierung sind in der Regel separat von einer übergeordneten Einheit (z.B. einer SPS), die zur Prozesssteuerung dient, ausgebildet und an einem übergeordneten Firmennetzwerk (beispielsweise an einem Ethernet®-Netzwerk) angeschlossen. Ferner ist diesen Systemen gemeinsam, dass sie für die Ausführung ihrer Dienste oftmals (je nach konkreter Ausgestaltung der Systeme) Konfigurationsinformationen bezüglich des zyklischen Datenverkehrs auf dem jeweiligen Feldbus benötigen. Dementsprechend können gemäß der vorliegenden Weiterbildung solchen Systemen auf einfache Weise die jeweils erforderlichen Konfigurationsinformationen bezüglich des zyklischen Datenverkehrs auf dem Feldbus bereitgestellt werden.

Gemäß einer vorteilhaften Weiterbildung ist der Feldbus gemäß dem Profibus®-Standard (vgl. z.B. Profibus Profile Specification, Version 3.0) ausgebildet. Alternativ kann der Feldbus aber auch gemäß einem anderen Standard, wie beispielsweise gemäß dem Foundation®-Fieldbus-Standard (vgl. z.B. Foundation® Specification, Function Block Application Process, Revision FS 1.7), etc., ausgebildet sein.

Gemäß einer Weiterbildung erfasst das Feldbus-Interface (in Schritt B) mitgehörte Konfigurationsinformationen, die in einem "Chk_Cfg-Telegramm" und/oder in einem "Set_Prm-Telegramm" übermittelt werden. Wie oberhalb aus der Erläuterung der Initialisierungsphase eines Profibus®-Feldgerätes hervorgeht, werden insbesondere in solch einem "Chk_Cfg-Telegramm" und "Set_Prm-Telegramm" Konfigurationsinformationen bezüglich des zyklischen Datenverkehrs auf dem Feldbus übermittelt. Daneben können durch das Feldbus-Interface aber auch in anderen Telegrammtypen übermittelte Konfigurationsinformationen bezüglich des zyklischen Datenverkehrs auf dem Feldbus erfasst werden.

Die vorliegende Erfindung betrifft ferner ein Feldbus-Interface zum Anschluss an einen Feldbus der Prozessautomatisierungstechnik, wobei das Feldbus-Interface derart ausgebildet ist, dass durch dieses der Datenverkehr auf dem Feldbus abhörbar ist und mitgehörte Konfigurationsinformationen, welche die Konfiguration des zyklischen Datenverkehrs auf dem Feldbus betreffen, durch das Feldbus-Interface erfassbar sind.

Durch das erfindungsgemäße Feldbus-Interface sind im Wesentlichen die oberhalb in Bezug auf das erfindungsgemäße Verfahren erläuterten Vorteile erzielbar. Ferner sind auch die jeweils in Bezug auf das erfindungsgemäße Verfahren erläuterten Weiterbildungen in entsprechender Weise realisierbar, wobei die jeweiligen Verfahrensschritte, soweit dies technisch sinnvoll ist, durch eine entsprechend eingerichtete Soft- und/oder Hardware des Feldbus-Interface realisierbar sind.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: eine schematische Darstellung eines Feldbus-Segments, das über ein Feldbus-Interface mit einem übergeordneten Netzwerk verbunden ist, zur Erläuterung einer Ausführungsform der Erfindung; und
- Fig. 2:: eine beispielhafte Darstellung der Schritte des Abhörens und Erfassens von Konfigurationsinformationen, die in einem "Chk_Cfg-Telegramm" übermittelt werden.

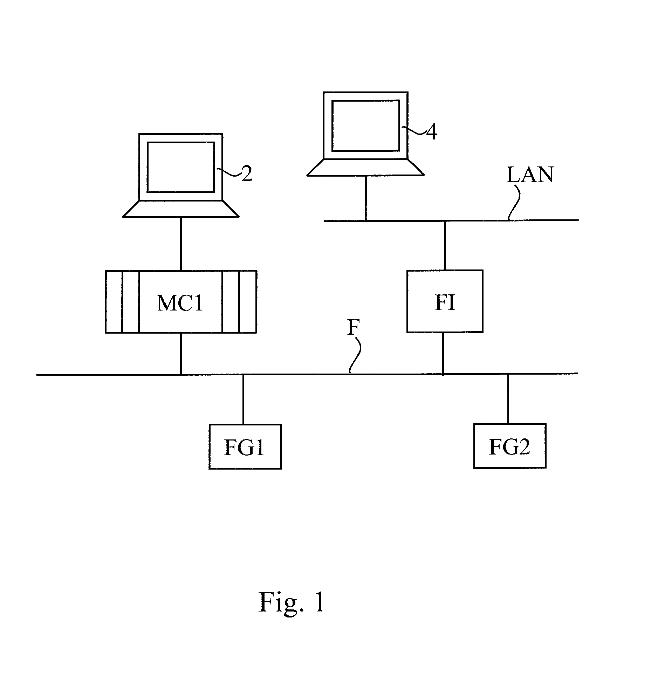

In Fig. 1 ist ein Feldbus-Segment schematisch dargestellt, bei dem zwei Feldgeräte FG1 und FG2 sowie eine übergeordnete Einheit MC1 an einem Feldbus F angeschlossen sind. Der Feldbus F arbeitet nach dem Profibus®-Standard. Die übergeordnete Einheit MC1, die vorliegend durch eine SPS gebildet wird, ist als Master Klasse 1 (MC1) konfiguriert, während die Feldgeräte FG1 und FG2 jeweils Slaves sind. Die übergeordnete Einheit MC1 ist mit einem Rechner 2 verbunden, der als Visualisierungssystem (bspw. zur Anzeige von Prozessparametern, etc.) dient. Die Kommunikation zwischen der übergeordneten Einheit SPS und den Feldgeräten FG1 und FG2 erfolgt gemäß dem Profibus®-Standard. Dabei führt die übergeordnete Einheit in Bezug auf die Feldgeräte FG1 und FG2 (nach einer Initialisierung derselben) eine Prozesssteuerung durch, wie bereits oberhalb in dem allgemeinen Beschreibungsteil beispielhaft erläutert wurde.

An dem Feldbus F ist ferner ein Feldbus-Interface FI angeschlossen, das eine Verbindung zu einem übergeordneten Netzwerk LAN herstellt. Das übergeordnete Netzwerk LAN ist beispielsweise ein lokales Firmennetz, das als Ethernet-LAN ausgebildet ist. Dabei kann das übergeordnete Netzwerk LAN auch an das weltweite Internet angeschlossen sein. An dem übergeordneten Netzwerk LAN ist ein PAM-System 4, das in Bezug auf die Netzwerkstruktur und relativ zu dem Feldbus-Interface FI eine übergeordnete Kommunikationseinheit bildet, angeschlossen.

Wie durch die offenen Linien des Feldbusses F sowie des übergeordneten Netzwerkes LAN dargestellt ist, können sowohl an dem Feldbus F als auch an dem übergeordneten Netzwerk LAN auch noch weitere Geräte und/oder Netzwerke angeschlossen sein. Insbesondere können zusätzlich oder alternativ zu dem PAM-System 4 auch noch ein computerunterstütztes Zustands-Überwachungssystem und/oder ein computerunterstütztes System zur Anlagenoptimierung an dem übergeordneten Netzwerk LAN angeschlossen sein. Ferner kann das übergeordnete Netzwerk LAN auch noch mit weiteren Feldbussen verbunden sein.

Wie bereits oberhalb in dem allgemeinen Beschreibungsteil erläutert wird, hört das Feldbus-Interface FI im Betrieb den Datenverkehr auf dem Feldbus F ab und erfasst mitgehörte Konfigurationsinformationen bezüglich des zyklischen Datenverkehrs auf dem Feldbus F. Die erfassten Konfigurationsinformationen werden in einem Speicher des Feldbus-Interface FI gespeichert. Wenn das PAM-System 4 Konfigurationsinformationen bezüglich des zyklischen Datenverkehrs auf dem Feldbus F für die Ausführung seiner Dienste benötigt, sendet es über das übergeordnete Netzwerk LAN eine entsprechende Anfrage an das Feldbus-Interface FI. In Antwort darauf übermittelt das Feldbus-Interface FI dem PAM-System 4 die angeforderten Konfigurationsinformationen.

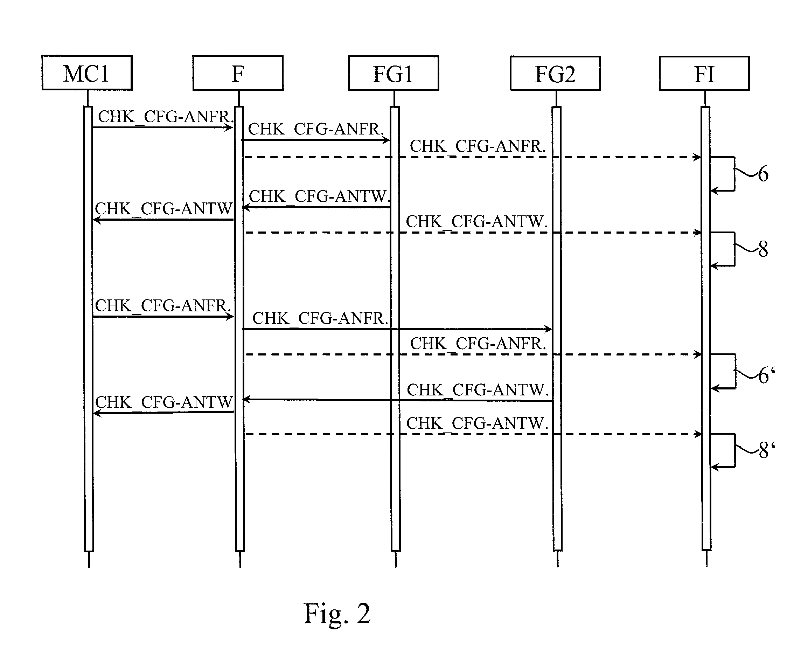

Nachfolgend werden unter Bezugnahme auf Fig. 2 beispielhaft die Schritte des Abhörens (Schritt A) und des Erfassens (Schritt B) anhand der Übermittlung eines "Chk_Cfg-Telegramms" über den Feldbus F erläutert. Dabei wird von einer Netzwerk-Konstellation, wie sie in Fig. 1 dargestellt ist, ausgegangen. In Fig. 2 sind die Kommunikationsebenen der übergeordneten Einheit MC1, des Feldbusses F, des Feldgerätes FG1, des Feldgerätes FG2 und des Feldbus-Interfaces FI jeweils als vertikal verlaufende Blöcke dargestellt. Die über den Feldbus F übermittelten Telegramme sind jeweils als Pfeile in durchgezogener Linie dargestellt, während das Abhören der einzelnen Telegramme durch das Feldbus-Interface FI jeweils durch gestrichelte Pfeile, die von dem Feldbus F zu dem Feldbus-Interface FI führen, dargestellt ist.

In Fig. 2 ist in der oberen Hälfte eine Kommunikation zwischen der übergeordneten Einheit MC1 und dem Feldgerät FG1 dargestellt. Bei dem dargestellten Beispiel übersendet die übergeordnete Einheit ein "Chk_Cfg-Anfragetelegramm" über den Feldbus F an das Feldgerät FG1. Dies ist in Fig. 2 durch die beiden durchgezogenen, mit "CHK_CFG-ANFR." bezeichneten Pfeile dargestellt. Wie oberhalb in Bezug auf die Initialisierungsphase eines Profibus®-Feldgerätes erläutert wird, wird in solch einem "Chk_Cfg-Anfragetelegramm" die Konfiguration des Feldgerätes FG1 übersendet. Dabei handelt es sich um Konfigurationsinformationen bezüglich des zyklischen Datenverkehrs auf dem Feldbus F. Das Feldbus-Interface FI hört den Datenverkehr auf dem Feldbus F ab und hört dementsprechend auch das "Chk_Cfg-Anfragetelegramm" mit. Dies ist in Fig. 2 durch den gestrichelten, mit "CHK_CFG-ANFR." bezeichneten Pfeil dargestellt. In dem Feldbus-Interface FI werden die mitgehörten Informationen daraufhin geprüft, ob es sich um Konfigurationsinformationen bezüglich des zyklischen Datenverkehrs auf dem Feldbus F handelt. Da dies der Fall ist, werden diese Konfigurationsinformationen erfasst und in dem Speicher des Feldbus-Interface FI gespeichert. Diese Schritte sind in Fig. 2 durch den rückführenden Pfeil 6 dargestellt.

In Antwort auf das "Chk_Cfg-Anfragetelegramm" übersendet das Feldgerät FG1 ein "Chk_Cfg-Antworttelegramm" über den Feldbus F an die übergeordnete Einheit MC1. Dies ist in Fig. 2 durch die beiden durchgezogenen, mit "CHK_CFG-ANTW." bezeichneten Pfeile dargestellt. Wie oberhalb in Bezug auf die Initialisierungsphase eines Profibus®-Feldgerätes erläutert wird, wird in solch einem "Chk_Cfg-Antworttelegramm" der Erhalt der Konfiguration bestätigt. Das Feldbus-Interface FI hört wiederum das "Chk_Cfg-Antworttelegramm" mit. Dies ist in Fig. 2 durch den gestrichelten, mit "CHK_CFG-ANTW." bezeichneten Pfeil dargestellt. Sollte die in dem "Chk_Cfg-Anfragetelegramm" übermittelte Konfiguration des Feldgerätes FG1 nicht korrekt sein, so teilt das Feldgerät FG1 dies in Antwort auf eine nachfolgend von der übergeordneten Einheit MC1 übersendete Diagnoseanfrage ("Slave_Diag-Anfragetelegramm") mit. Diese Diagnoseanfrage wurde bereits oberhalb in Bezug auf die Profibus®-Zustandsmaschine erläutert. Ist die übermittelte Konfiguration korrekt, so wird sie von dem Feldgerät FG1 übernommen. Die Verfolgung dieser Schritte durch das Feldbus-Interface FI ist in Fig. 2 durch den rückführenden Pfeil 8 dargestellt.

In Fig. 2 sind dabei lediglich die Übersendung des "Chk_Cfg-Anfragetelegramms" und des zugehörigen "Chk_Cfg-Antworttelegramms" zwischen der übergeordneten Einheit MC1 und dem Feldgerät FG1 dargestellt. Die weiteren, während einer Initialisierungsphase des Feldgerätes FG1 zwischen der übergeordneten Einheit MC1 und dem Feldgerät FG1 über den Feldbus F übermittelten Telegramme sind nicht dargestellt. Ein Abhören solcher Telegramme, insbesondere von "Set_Prm-Telegrammen", sowie weiterer (beispielsweise im Rahmen des zyklischen Datenverkehrs übermittelter) Telegramme und das Prüfen und gegebenenfalls Erfassen und Speichern von darin enthaltenen Konfigurationsinformationen erfolgt in entsprechender Weise.

In der unteren Hälfte in Fig. 2 ist eine Kommunikation zwischen der übergeordneten Einheit MC1 und dem Feldgerät FG2 dargestellt. Wiederum wird von der übergeordneten Einheit MC1 ein "Chk_Cfg-Anfragetelegramm" über den Feldbus F an das Feldgerät FG2 übersendet und der Erhalt desselben von dem Feldgerät FG2 durch Übersenden eines "Chk_Cfg-Antworttelegramms" über den Feldbus F an die übergeordnete Einheit MC1 bestätigt. Sowohl das "Chk_Cfg-Anfragetelegramm" als auch das "Chk_Cfg-Antworttelegramm" werden durch das Feldbus-Interface FI abgehört. Bezüglich dieser Kommunikation zwischen der übergeordneten Einheit MC1 und dem Feldgerät FG2 wird auf die Erläuterungen oberhalb Bezug genommen, die in entsprechender Weise anwendbar sind. Wiederum werden die mitgehörten Informationen in dem Feldbus-Interface FI daraufhin geprüft, ob es sich um Konfigurationsinformationen bezüglich des zyklischen Datenverkehrs auf dem Feldbus F handelt. Da dies sowohl bei dem "Chk_Cfg-Anfragetelegramm" als auch bei dem "Chk_Cfg-Antworttelegramm" der Fall ist, werden diese Konfigurationsinformationen erfasst und in dem Speicher des Feldbus-Interface FI gespeichert. Dies ist in Fig. 2 durch die beiden rückführenden Pfeile 6' und 8' dargestellt.

## Patentansprüche

1. Verfahren zum Betreiben eines Feldbus-Interface (FI), das an einem Feldbus (F) der Prozessautomatisierungstechnik angeschlossen ist, aufweisend nachfolgende Schritte:
A) Abhören des Datenverkehrs auf dem Feldbus (F) durch das Feldbus-Interface (FI); und
B) Erfassen von mitgehörten Konfigurationsinformationen, welche die Konfiguration des zyklischen Datenverkehrs auf dem Feldbus (F) betreffen, durch das Feldbus-Interface (FI).

2. Verfahren gemäß Anspruch 1, **dadurch gekennzeichnet, dass** die Konfigurationsinformationen bezüglich des zyklischen Datenverkehrs auf dem Feldbus (F) Informationen über die Ausgänge, die im Rahmen einer Prozesssteuerung von einer übergeordneten Einheit (MC1) an ein ihr zugeordnetes Feldgerät (FG1, FG2) geliefert werden, und/oder
Informationen über die Eingänge, die im Rahmen einer Prozesssteuerung durch eine übergeordnete Einheit (MC1) von einem ihr zugeordneten Feldgerät (FG1, FG2) erhalten werden,
aufweisen.

3. Verfahren gemäß Anspruch 1 oder 2, **dadurch gekennzeichnet, dass** die Konfigurationsinformationen bezüglich des zyklischen Datenverkehrs auf dem Feldbus (F)
Informationen bezüglich der Geräteparameter, insbesondere bezüglich einer Frequenz des Wechselstromnetzes, das zur Versorgung von an dem Feldbus (F) angeschlossenen Geräten (MC1, FG1, FG2, FI) eingesetzt wird, aufweisen.

4. Verfahren gemäß einem der vorangehenden Ansprüche, **dadurch gekennzeichnet, dass** erfasste Konfigurationsinformationen bezüglich des zyklischen Datenverkehrs auf dem Feldbus (F) durch das Feldbus-Interface (FI) gespeichert werden.

5. Verfahren gemäß einem der vorangehenden Ansprüche, **dadurch gekennzeichnet, dass** der Datenverkehr auf dem Feldbus (F) durch das Feldbus-Interface (FI) zumindest während einer Initialisierungsphase mindestens eines, an dem Feldbus (F) angeschlossenen Feldgerätes (FG1, FG2) kontinuierlich abgehört wird.

6. Verfahren gemäß einem der vorangehenden Ansprüche, **gekennzeichnet durch** nachfolgenden Schritt:
C) Übermitteln von erfassten Konfigurationsinformationen bezüglich des zyklischen Datenverkehrs auf dem Feldbus (F) **durch** das Feldbus-Interface (FI) an mindestens eine Kommunikationseinheit (4), die mit dem Feldbus-Interface (FI) in Kommunikationsverbindung steht.

7. Verfahren gemäß Anspruch 6, **dadurch gekennzeichnet, dass** erfasste Konfigurationsinformationen bezüglich des zyklischen Datenverkehrs auf dem Feldbus (F) durch das Feldbus-Interface (FI) an ein computerunterstütztes Anlagen-Asset-Management-System (4), an ein computerunterstütztes Zustands-Überwachungs-System und/oder an ein computerunterstütztes System zur Anlagenoptimierung übermittelt werden.

8. Verfahren gemäß einem der vorangehenden Ansprüche, **dadurch gekennzeichnet, dass** der Feldbus (F) gemäß dem Profibus®-Standard ausgebildet ist.

9. Verfahren gemäß Anspruch 8, **dadurch gekennzeichnet, dass** das Feldbus-Interface (FI) mitgehörte Konfigurationsinformationen, die in einem "Chk_Cfg-Telegramm" und/oder in einem "SetPrm-Telegramm" übermittelt werden, erfasst.

10. Feldbus-Interface zum Anschluss an einen Feldbus (F) der Prozessautomatisierungstechnik, wobei das Feldbus-Interface (FI) derart ausgebildet ist, dass durch dieses der Datenverkehr auf dem Feldbus (F) abhörbar ist und mitgehörte Konfigurationsinformationen, welche die Konfiguration des zyklischen Datenverkehrs auf dem Feldbus (F) betreffen, durch das Feldbus-Interface (FI) erfassbar sind.

## Claims

1. Procedure designed to operate a fieldbus interface (FI), which is connected to fieldbus (F) used in process automation engineering, consisting of the following steps:
A) monitoring of the data traffic on the fieldbus (F) by the fieldbus interface (FI); and
B) recording of monitored configuration information 2 concerning the configuration of the cyclic data traffic on the fieldbus (F) by the fieldbus interface (FI).

2. Procedure as claimed in Claim 1, **characterized in that** the configuration information concerning the cyclic data traffic on the fieldbus (F) contain information about the outputs which, in the course of process control, is supplied by a higher-order unit (MC1) to a field device (FG1, FG2) assigned to it, and/or
information about the inputs which, in the course of process control, is received by a higher-order unit (MC1) from a field device (FG1, FG2) assigned to it.

3. Procedure as claimed in Claim 1 or 2, **characterized in that** the configuration information concerning the cyclic data traffic on the fieldbus (F) contains information with regard to the device parameters, particularly with regard to a frequency of the alternating current network which is used to supply power to devices (MC1, FG1, FG2, FI) connected to the fieldbus (F).

4. Procedure as claimed in one of the previous claims, **characterized in that** captured configuration information concerning the cyclic data traffic on the fieldbus (F) is saved by the fieldbus interface (FI).

5. Procedure as claimed in one of the previous claims, **characterized in that** the data traffic on the fieldbus (F) is continuously monitored by the fieldbus interface (FI) at least during an initialization phase of at least one field device (FG1, FG2) connected to the fieldbus (F).

6. Procedure as claimed in one of the previous claims, **characterized by** the following step:
C) transmission of captured configuration information concerning the cyclic data traffic on the fieldbus (F) by the fieldbus interface (FI) to at least one communication unit (4), which has a communication connection to the fieldbus interface (FI).

7. Procedure as claimed in Claim 6, **characterized in that** captured configuration information concerning the cyclic data traffic on the fieldbus (F) is transmitted by the fieldbus interface (FI) to a computer-assisted plant asset management system (4), to a computer-assisted condition monitoring system and/or to a computer-assisted system for facility optimization.

8. Procedure as claimed in one of the previous claims, **characterized in that** the fieldbus (F) is designed in accordance with the Profibus® standard.

9. Procedure as claimed in Claim 8, **characterized in that** the fieldbus interface (FI) captures monitored configuration information which is transmitted in a "Chk_Cfg" and/or a "SetPrm" message.

10. Fieldbus interface for connection to a fieldbus (F) used in process automation engineering, wherein the fieldbus interface (FI) is designed in such a way that it is possible to monitor the data traffic on the fieldbus (F) via the interface, and monitored configuration information 2 that concerns the configuration of the cyclic data traffic on the fieldbus (F) can be captured by the fieldbus interface (FI).

## Revendications

1. Procédé destiné à l'exploitation d'une interface de bus de terrain (FI), laquelle est raccordée à un bus de terrain (F) de la technique d'automatisation des process, comprenant les étapes suivantes :
A) Surveillance du trafic de données sur le bus de terrain (F) par l'intermédiaire de l'interface de bus de terrain (FI) ; et
B) Saisie d'informations de configuration 2 également surveillées, qui concernent la configuration du trafic de données cyclique sur le bus de terrain (F), par l'intermédiaire de l'interface de bus de terrain (FI).

2. Procédé selon la revendication 1, **caractérisé en ce que** les informations de configuration concernant le trafic de données cyclique sur le bus de terrain (F) contiennent des informations sur les sorties, qui sont délivrées dans le cadre d'une commande de process par une unité maître (MC1) à un appareil de terrain (FG1, FG2) affecté à l'unité maître, et/ou
des informations sur les entrées, qui sont reçues dans le cadre d'une commande de process par une unité maître (MC1) en provenance d'un appareil de terrain (FG1, FG2) affecté à l'unité maître.

3. Procédé selon la revendication 1 ou 2, **caractérisé en ce que** les informations de configuration concernant le trafic de données cyclique sur le bus de terrain (F) contiennent des informations concernant les paramètres d'appareil, notamment concernant une fréquence du réseau de courant alternatif, lequel est utilisé pour l'alimentation d'appareils (MC1, FG1, FG2, FI) raccordés au bus de terrain (F).

4. Procédé selon l'une des revendications précédentes, **caractérisé en ce que** les informations de configuration saisies, concernant le trafic de données cyclique sur le bus de terrain (F), sont enregistrées par l'interface de bus de terrain (FI).

5. Procédé selon l'une des revendications précédentes, **caractérisé en ce que** le trafic de données sur le bus de terrain (F) par l'intermédiaire de l'interface de bus de terrain (FI) est surveillé continuellement au moins pendant une phase d'initialisation pour au moins un appareil de terrain (FG1, FG2) raccordé au bus de terrain (F).

6. Procédé selon l'une des revendications précédentes, **caractérisé par** l'étape suivante :
C) Transmission d'informations de configuration saisies, concernant le trafic de données cyclique sur le bus de terrain (F), par l'intermédiaire de l'interface de bus de terrain (FI) vers au moins une unité de communication (4), qui dispose d'une liaison de communication avec l'interface de bus de terrain (FI).

7. Procédé selon la revendication 6, **caractérisé en ce que** les informations de configuration saisies, concernant le trafic de données cyclique sur le bus de terrain (F), par l'intermédiaire de l'interface de bus de terrain (FI), sont transmises vers un système de gestion des actifs (4) assisté par ordinateur, vers un système de surveillance d'état assisté par ordinateur et/ou vers un système assisté par ordinateur, destiné à l'optimisation de l'installation.

8. Procédé selon l'une des revendications précédentes, **caractérisé en ce que** le bus de terrain (F) est conçu conformément à la norme Profibus®.

9. Procédé selon la revendication 8, **caractérisé en ce que** l'interface de bus de terrain (FI) saisit les informations de configuration surveillées, lesquelles sont transmises dans un télégramme "Chk_Cfg" et/ou dans un télégramme "SetPrm".

10. Interface de bus de terrain destinée au raccordement à un bus de terrain (F) de la technique d'automatisation, l'interface de bus de terrain (FI) étant conçue de telle manière à permettre la surveillance du trafic de données sur le bus de terrain (F), ainsi que la saisie par l'intermédiaire de l'interface de bus de terrain (FI) des informations de configuration 2 également surveillées, qui concernent la configuration du trafic de données cyclique sur le bus de terrain (F).
